# EUROPEAN PATENT APPLICATION

(11) **EP 0 997 891 A1**
(43) Date of publication of application: **03.05.2000**
(21) Application number: 99120766.3
(22) Date of filing: 20.10.1999
(51) Int. Cl.: G11B 7/24, G11B 23/00

(54) **Balanced optical disc**

(30) Priority: 30.10.1998 DE 19850302
(71) Applicant: DEUTSCHE THOMSON-BRANDT GMBH, 78048 Villingen-Schwenningen (DE)
(72) Inventor: Schröder, Heinz-Jörg, 78052 Villingen-Schwenningen (DE); Uhde, Dietmar, 78126 Königsfeld (DE)
(74) Representative: Kurth, Dieter, Dipl.-Ing.

(57) **Abstract**

The application concerns an arrangement and a process for a balanced optical disc, which is also known as an optical information medium, such as a CD, CD-ROM or DVD for example.

The application provides an optical information medium which, to compensate for an unbalance of the disc, has at least one recess which is formed by a depression or a clearance. In a way corresponding to the process for producing a balanced optical disc, the optical disc is produced by determining its unbalance with a balancing machine, calculating the angular position of the unbalance and the change in mass required to compensate for the unbalance in predetermined diameter regions of the disc and by performing the change in mass with or in recesses in the disc. The area of applications for the invention is that of optical information media, in particular rotating at high speed.

## Description

The invention concerns an arrangement and a process for a balanced optical disc. The term optical disc is used to refer to information media on which information has already been optically stored or is stored or written.

Optical discs or optical information media, such as CDs, CD-ROMs, CD-RWs or else DVDs for example, are already known. These are information media which are generally produced to conform to a standard. In the standard, a maximum permissible unbalance is also generally already defined.

Irrespective of the provisions already specified for information media, the scanning speed of information media has, however, constantly continued to increase, with the result that it is already many times the scanning speed originally envisaged. The reason for the increase in the scanning speed can be seen especially in the reduction in access time and in the increase in the data rates provided.

It has already been established that information media having the limit value for unbalance permissible according to the standard were destroyed in equipment supposedly capable for example of reading a CD-ROM with a 32-speed drive. Other equipment for writing or reading optical information media are equipped with a so-called autobalancer to compensate for the unbalance caused by the information medium. Previously customary optical discs have an unbalance to a greater or lesser extent. On DVD or CD players, which rotate at many times the nominal speed, this unbalance leads to extreme vibrations, oscillations and impact effects on the drive, which on the one hand can become very noisy and on the other hand also reduce the scanning quality. The scanning quality is impaired as a result and the servo control loops must compensate for these vibrational effects.

Particularly in the area of CD-ROMs and DVD-ROMs, considerable expenditure on mechanical and electronic hardware is required to play back the disc with correspondingly great data transfer rates. In addition, some discs may have such a great unbalance that they can be played back only at a relatively low speed and consequently low data rate.

It is the object of the invention to provide an arrangement and a process for a balanced optical disc.

This object is achieved by means specified in independent claims; advantageous designs and developments are specified in dependent claims.

One aspect of the invention is to design an optical disc in such a way that, in spite of an unbalance caused by the production process, it can be produced as a balanced optical disc, and a further aspect of the invention is to specify a process by which a balanced disc can be produced from a disc which has an unbalance caused by its production.

The basic assumption is made that, in the production process for optical discs, tolerances in the dimensions and uneven mass distributions occur, leading to an unbalance of the optical disc. Even with extremely high-precision production of the disc body, just a label with varying ink density on the disc is enough, for example, to produce an unbalance.

The invention is based on the principle of designing a disc in such a way that it is possible to compensate for an unbalance by simple means. It is envisaged for this purpose to design the disc in such a way that it has recesses to compensate for an unbalance. Such recesses are, for example, spoke-shaped recesses or clearances in the inner region or on the circumference of the disc.

If it is established at the end of the production process that the disc has an unbalance, recesses in the disc are used in an advantageous way to compensate for the unbalance. According to one configuration, for example, a material is introduced into the depressions to compensate for the unbalance. The use of recesses formed by depressions or clearances for introducing a material to compensate for unbalance is particularly advantageous since compensation for unbalance is achieved in spite of maintaining the standardized, external dimensions of the disc and consequently basic compatibility is ensured by observing the prescribed dimensions.

The balancing preferably takes place in an automated manner, by a balancing machine driving the disc at high speed and adhesive, for example, subsequently being introduced into depressions or clearances in the disc in such an apportioned manner that the disc is balanced. The procedure may have to be repeated a number of times. However, balancing machines with which both the location and the mass of the material required to compensate for the unbalance can be precisely determined are already known.

In addition to the introduction of material, however, the removal of disc material or changing of the mass distribution of the disc may also be envisaged to compensate for unbalance. In accordance with these embodiments, the recesses themselves are used to compensate for the unbalance. The removal of disc material may take place either by punching out, burning out, melting away or grinding away disc material, while a melting process by heat treatment with a die is envisaged for changing the mass distribution. An inner region of the disc between the centre hole of the disc, used as a centring opening, and the clamping region of the disc or the circumference of the disc is envisaged as the region for recesses. The state of a disc in which the disc has already been provided with inscription or with a label is to be regarded as the end of the production process before balancing.

With an already balanced optical disc, the requirements which the drive has to meet are reduced. The discs configured in a way corresponding to the type mentioned above run very quietly and can be played back or have information written to them without any problems, even at high rotational speeds, and even an unbalance produced by the printing on of the inscription during disc production is fully compensated if the balancing of the disc is carried out as the last production step. As a result of the fact that the compensation for the unbalance is provided in such regions and in such a way that dimensions provided in the standard are not exceeded or inadmissibly changed, the balanced disc is fully compatible with the previously known discs and consequently can be used advantageously without restrictions in corresponding recording or playback equipment.

The invention is explained in more detail below with reference to drawings, in which:
Figure 1 shows a basic diagram in plan view of spoke-shaped depressions in the inner region of the disc and material introduced to compensate for unbalance,
Figure 2 shows a basic diagram as a side view in section of recesses in the disc to compensate for unbalance,
Figure 3 shows a basic diagram of a device to compensate for unbalance with vertical disc suspension,
Figure 4 shows a basic diagram of a device to compensate for unbalance with horizontal disc suspension,
Figure 5 shows a basic diagram of a device to compensate for unbalance by removing disc material,
Figure 6 shows a basic diagram in a plan view of elliptical depressions in the outer region of the disc and material introduced to compensate for unbalance,
Figure 7 shows a basic diagram of a device to compensate for unbalance by changing the mass distribution,
Figure 8 shows a basic diagram of a device to compensate for unbalance with a conical disc clamping means,
Figure 9 shows a basic diagram in a plan view of recesses in the outer region of the disc to compensate for unbalance with a compensating means, and
Figure 10 shows a basic diagram in a plan view of recesses or applications of material as compensating means in the outer region of the disc to compensate for unbalance.

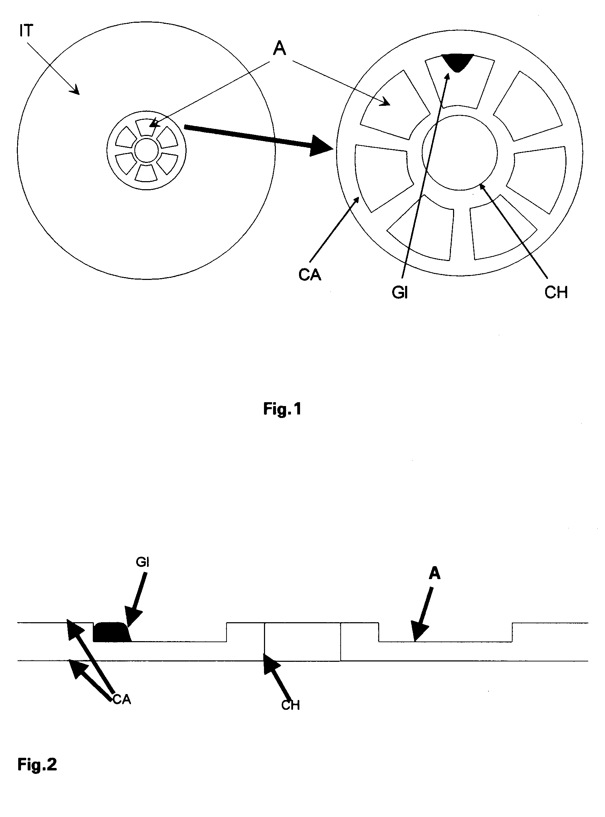

In the drawings, designations are used consistently. The basic diagram represented in Figure 1 of an optical disc IT shows an optical information medium which has recesses A in the inner region of the disc IT, within the so-called clamping region CA of the disc IT. The recesses A are provided in a way corresponding to Figure 1 as spoke-shaped clearances, which are used in an advantageous way to compensate for unbalance.

In a way corresponding to a first configuration, the clearances are made in the disc IT eccentrically with respect to the centre hole CH of the disc IT in such a way that they compensate for an unbalance of the disc IT by their eccentric arrangement alone. The unbalance of the disc IT is determined at the end of the production process by a balancing machine and a punching or melting-out tool is positioned eccentrically with respect to the centre hole CH in such a way that a mass corresponding to the unbalance of the disc IT is removed. The clearances are provided in a region which is located between the centre hole CH and the so-called clamping region CA of the disc IT. A disc IT produced according to the standard referred to as the Red Book has a centre hole CH with a diameter of 15 mm and the clamping region CA extends in the region of the diameter of 26 to 33 mm. The centre hole CH is used in particular for centring the disc IT on the turntable of recording or playback equipment and the clamping region CA is envisaged in particular for clamping the disc IT between the turntable and a hold-down device, in order to ensure that the disc IT is taken along and held on the turntable even at a high scanning speed or rotational speed. In a way corresponding to Figure 1, spoke-shaped clearances to compensate for an unbalance of the disc IT are provided at a distance from the diameters intended as limit values for the centre hole CH and the clamping region CA. However, the application is not restricted to spoke-shaped clearances, since circles, ellipses or other shapes may be used for making the clearances by which the recesses A are formed.

In a way corresponding to a second configuration, which is represented in Figure 2 and Figure 1, the recesses A are provided as depressions in the already mentioned region between the centre hole CH and the clamping region CA. The depressions, which can be seen in particular from Figure 2, between the centre hole CH and the clamping region CA, are produced, for example, already during the production of the disc blank in the injection mould for the basic disc body and are used in an advantageous way at the end of the production process for the disc IT to compensate for an unbalance. In a way corresponding to this configuration of the invention, the recesses A are preferably arranged concentrically with respect to the centre hole CH, and material Gl which bonds with the material of the disc IT is introduced into one or more of the depressions provided, the said material being arranged in an amount and distribution corresponding to the unbalance originating from the disc IT. A rapidly curing adhesive or a plastic which bonds with the disc IT in a melting process is used as the material Gl. The apportioning of the material Gl in one or more depressions of the disc is envisaged here in such a way that a permissible thickness of the disc IT is not exceeded. As a result, use of the balanced disc IT in all equipment intended for the type of disc is ensured without any restrictions in comparison with the non-balanced disc. As a result, the balanced disc IT is fully compatible and has, furthermore, improved properties which are attributable in particular to a reduced unbalance. Such properties are, for example, smoother running, improved scanning as a result of less track and focus correction and a more faithful reproduction as a result of the lower number of values calculated for gaps in the sampled data stream, to mention just a few.

The force required for holding the balanced disc IT on the turntable is less and a comparatively higher scanning speed is achieved with a balanced disc IT.

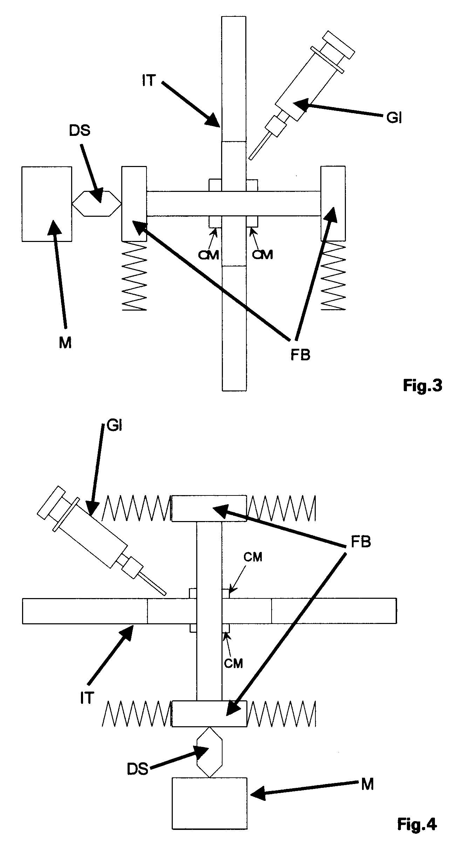

Envisaged for balancing the disc IT is a device indicated in Figure 3 as a basic diagram which has deflectable bearings FB, which are interconnected via a shaft. Provided at the deflectable bearings FB, which are movable in the vertical and horizontal directions, are deflecting sensors (not shown) and the disc IT is fastened by clamping means CM on the shaft connecting the deflectable bearings FB. The clamping means CM do not clamp the disc IT in the customary way for clamping the disc IT in the clamping region CA provided on the turntable, but directly alongside the centre hole CH. The shaft which connects the deflectable bearings FB is driven, for example, via a movable drive shaft DS by a motor. The drive of the shaft may also take place, however, by blowing on compressed air or by an electromagnetic rotary field. The deflectable bearings FB are deflected by the unbalance of a rotating disc IT and the degree of the deflection is established by deflecting sensors. Force or acceleration sensors, with which the magnitude and location or position of the unbalance of the disc IT are determined, may be used as deflecting sensors. Periodically occurring bearing forces are, according to phase and amplitude, a measure of the unbalance. Forces measured for example by two force sensors offset by 90 degrees are used to form a vector which, compared with the angular position of the disc IT, indicates the magnitude and angular position of the unbalance. In a way corresponding to the measured values, material Gl is then inserted into recesses A in the disc IT, material is removed from the disc IT or the mass distribution of the disc IT is changed. The balancing principle explained can in principle also be applied to all the following embodiments.

The balancing machine represented in Figure 3, in which the disc IT is vertically arranged and a material feed is provided above the shaft receiving the disc IT, is advantageously suited for compensating for a relatively low unbalance, since it is envisaged to perform the material feeding not at the outer edge of the recess A, as represented in Figures 1 and 2, but at the inner edge of the recess A. For material feeding at the outer edge of the recess A, with which a comparatively greater unbalance is compensated, the device for feeding material Gl is arranged underneath the shaft. This makes a finely graduated compensation for unbalance possible. In principle, the amount of material fed in at one point should not exceed the total thickness of the disc IT. With this in mind, material feeding in a plurality of recesses is envisaged. If the amount which can be fed in at one point under these conditions is exceeded, the measured values determined are used to calculate a distribution of the amounts of material to be fed in at different locations.

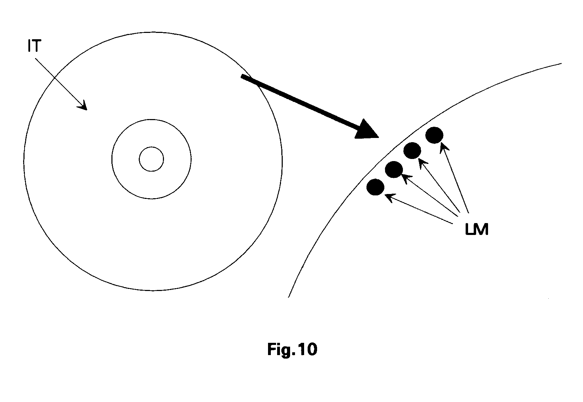

A viscous adhesive, which has only low flowing properties on account of its high viscosity, is envisaged as the material Gl bonding with the disc IT. However, application of the invention is not restricted to viscous materials Gl, since, by turning the device indicated in Figure 3 through 90 degrees, a device in which the disc IT is clamped horizontally is proposed as a basic diagram in Figure 4. The device indicated in Figure 4 is advantageous for applications when a relatively fluid material Gl is used to compensate for unbalance, filling recesses A formed by depressions in the disc IT. An advantage of such a configuration is that material Gl can be fed in at all points within the area formed by the depression and, as a result, particularly finely graduated compensation for unbalance is achieved.

Since unbalance is an unequally distributed mass, which is determined by the mass, the distance from a point of rotation and the angular position, a greater range of variation is obtained in the case of an area available for the compensation, in particular for the radius at which material Gl is introduced, than in the case of large clearances which permit the introduction of material Gl only at the edges.

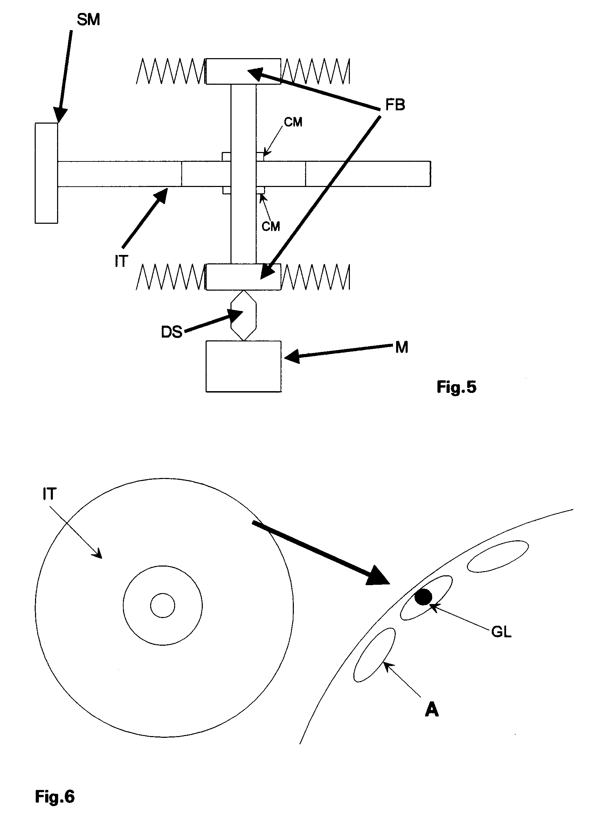

Nevertheless, in a way corresponding to a further configuration, in spite of the use of spoke-shaped clearances as recess A, a radius-dependent introduction of material is realized by choosing such a small spoke spacing that the material Gl extends over the distance between two spokes. According to a further configuration, which is represented as a basic diagram in Figure 5, it is envisaged to grind away the edge of the disc IT with an abrasive agent SM in the region of the angular position causing the unbalance. However, on account of the dimensions to be maintained to comply with the standard, this method can be applied only to a restricted extent and is limited by the outer diameter of the region provided for information storage on the disc IT. As a result, it is preferred to use this only to compensate for a small unbalance and, if appropriate, in combination with other methods indicated here.

Although the region between the outer edge of the disc IT and the outer diameter provided for information storage is relatively narrow, a configuration of the optical disc IT which has in this region recesses A to compensate for unbalance is envisaged in a way corresponding to Figure 6. These recesses A may likewise be provided as depressions or clearances. Although the region is relatively narrow, the shaping of the recesses A is virtually unlimited. One form of shaping the recesses A is, for example, the configuration as an ellipse, as represented in Figure 6. To compensate for an unbalance of the disc IT, the recesses A themselves are used, by punching out or stamping in, or material Gl is inserted into the recesses A in accordance with an unbalance determined.

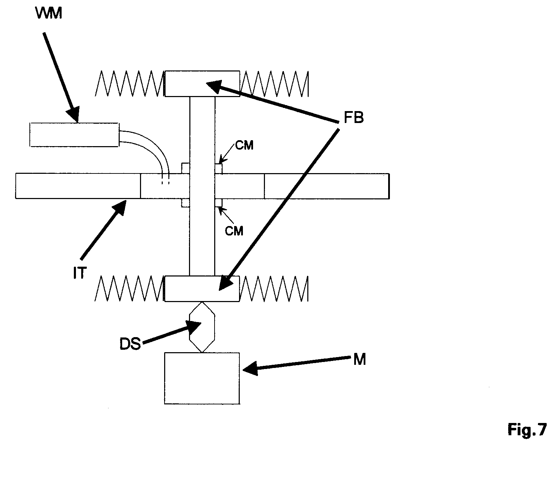

In a way corresponding to a further configuration, which is represented in a basic diagram in Figure 7, changing of the mass distribution is envisaged. For this purpose, mass of the disc IT is melted with a heated die WM in the region causing the unbalance and is displaced by pressing or drawing the die WM or by turning the disc IT. During this process, the disc IT can be temporarily supported by a device provided on the opposite side. The changing of the mass distribution by melting material of the disc IT is envisaged both in the inner region and in the outer region of the disc IT.

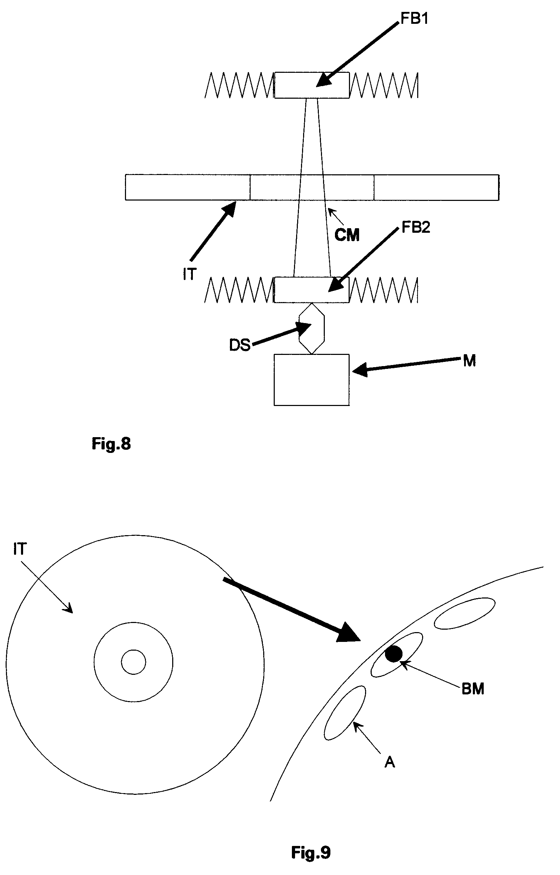

It should also be mentioned that the invention is not restricted to a specific clamping method for the disc during or for the process of compensating for unbalance. A basic diagram of a device to compensate for unbalance with a conical disc clamping means is indicated for example in this respect in Figure 8. The clamping means CM is formed by a cone, on which the disc IT firmly clamps itself, in particular by applying slight pressure, in order to be taken along by the shaft connecting the deflectable bearings.

Further embodiments of a disc IT with means provided in the outer region of the disc IT to compensate for unbalance are indicated in Figures 9 and 10. In way corresponding to Figure 9, in recesses A there are provided additional recesses BM, which are configured as depressions or clearances. Additional depressions have the effect in particular of increasing the adhesive capacity of the material introduced into recesses A and clearances have the effect of achieving in the recesses A provided as a depression an influence on the unbalance that is dependent to a lesser extent on the diameter of the clearance.

In a way corresponding to Figure 10, in the outer edge of the disc IT there are provided pins LM, which are inserted into recesses A provided for the pins LM and close these recesses. The pins have a specific weight, which differs from that of the disc IT, and as a result are suited for compensating for the unbalance of a disc IT. By introducing the pins LM with positive or non-positive engagement, it is not necessary for the material introduced to bond with the disc IT. The recesses A into which pins LM are introduced may, in addition, also be produced themselves by the insertion of the pins LM.

Both the variants for the configurations of recesses A in the disc IT mentioned above and the processes specified for compensating for unbalance can be used in combination with one another and the balancing operation can be repeated by repeatedly accelerating the disc IT for producing a balanced optical disc IT.

## Claims

1. Arrangement for a balanced optical disc (IT), characterized in that the optical disc (IT) has at least one recess (A) to compensate for an unbalance.

2. Arrangement according to Claim 1, characterized in that the recess (A) is formed by a spoke-shaped depression in the inner region on the circumference of the disc (IT).

3. Arrangement according to Claim 1, characterized in that the recess (A) comprises clearances in the inner region or on the circumference of the disc (IT).

4. Process for producing a balanced optical disc (IT), characterized in that material is inserted into at least one recess (A) of the optical disc (IT) to compensate for an unbalance of the optical disc (IT).

5. Process for producing a balanced optical disc (IT), characterized in that a balanced optical disc (IT) is produced by making at least one recess (A) in an optical disc (IT) which has an unbalance.

6. Process according to Claim 5, characterized in that the recess (A) is produced as a depression in the inner region or on the circumference of the disc (IT).

7. Process according to Claim 5, characterized in that the recess (A) is produced as a clearance in the inner region or on the circumference of the disc (IT).

8. Process according to Claim 4, characterized in that material which bonds with the disc material and is intended to compensate for the unbalance is inserted into a recess (A) provided to compensate for the unbalance of the optical disc (IT).

9. Process according to Claim 4, characterized in that material which is of a specific weight, different from that of the disc (IT), and is intended to compensate for the unbalance is inserted with positive or non-positive engagement into a recess (A) provided to compensate for the unbalance of the optical disc (IT).

10. Process according to one of Claims 4 and 5, characterized in that a balanced optical disc (IT) is produced by determining its unbalance with a balancing machine, calculating the angular position of the unbalance and the change in mass required to compensate for the unbalance in predetermined diameter regions of the disc (IT) and by performing the change in mass with or in recesses (A) in the disc (IT).
